# EUROPEAN PATENT SPECIFICATION

(11) **EP 2 718 636 B1**
(45) Date of publication and mention of the grant of the patent: **12.08.2015**
(21) Application number: 12745528.5
(22) Date of filing: 11.06.2012
(51) Int. Cl.: F24J 2/24, F24J 2/28, F24F 5/00, F25B 27/00

(54) **METHOD FOR THE CONVERSION OF ENERGY AND ENERGY CONVERTER**
VERFAHREN ZUR UMWANDLUNG VON ENERGIE UND ENERGIEWANDLER
PROCÉDÉ DE CONVERSION D'ÉNERGIE ET CONVERTISSEUR D'ÉNERGIE

(30) Priority: 10.06.2011 IT BO20110337
(43) Date of publication of application: 16.04.2014
(73) Proprietor: Signanini, Patrizio, Rapino (IT)
(72) Inventor: Signanini, Patrizio, Rapino (IT)
(74) Representative: Baroni, Matteo
(86) International application number: PCT/IB2012/052949
(87) International publication number: WO 2012/168929

(56) References cited:
- DE-A1-102005 024 172
- US-A- 4 377 398

## Description

### FIELD OF TECHNOLOGY

The present invention relates to a method for the conversion of energy, a corresponding energy converter an air conditioning system with such energy converters and the use of such an air conditioning system. In particular, this method is capable of converting energy from light and/or thermal sources at equilibrium vapour pressure.

### PRIOR ART

It is known to use solar panels to convert sunlight into electricity or thermal energy for the heating of fluids. These systems are bulky, heavy and of complex construction, also they have a reduced performance when using solar energy for cooling an environment, since it requires double the energy conversion from light radiation to electricity and subsequently electricity into refrigeration. Also based on the known systems, solar energy if converted directly into thermal energy is used only for heating and not for cooling.

The patent US4377398A1 discloses a vapour pump using for its functioning the thermal energy of a solar panel; the pump uses a solid matrix of a micro-porous adsorbent constituting a barrier. However, the vapour pump disclosed in the patent US4377398A1 has a relatively low energetic efficiency.

### DESCRIPTION OF THE INVENTION

The aim of the present invention is to provide a method for the conversion of energy, particularly solar energy, alternative to the methods known.

The aim of the present invention is to provide, in addition, an energy converter capable of overcoming the disadvantages described above and, in particular, capable of direct conversion capable of cooling a fluid heat exchanger without changing the absolute humidity and, consequently, able to cool an environment during a warm period (for example spring or summer) and heat an environment during a cold period (for example autumn or winter).

In other words, the aim of the present invention is to provide a converter of energy, in particular solar energy, which is energy efficient and able to generate refrigeration.

Accordingly the present invention provides a method of converting energy, an energy converter, an air conditioning system and a use of such an air conditioning system as asserted in the attached claims 1, 3, 9 and 10.

### BRIEF DESCRIPTION OF THE DRAWINGS

The invention will now be described with reference to the attached drawings, which illustrate an example of implementation is not limitative, in which:
- Figure 1 is a perspective view of an energy converter in accordance with the present invention;
- Figure 2 is a side view of the converter in Figure 1;
- Figure 3 is similar to Figure 2 and illustrates a first variant of the converter in Figure 1;
- Figure 4 is similar to Figure 2 and illustrates a second variant of the converter in Figure 1, and;
- Figure 5 is a schematic view with parts removed for clarity of an air conditioning system that includes at least one energy converter according to the present invention.

### PREFERRED FORMS FOR IMPLEMENTING THE INVENTION

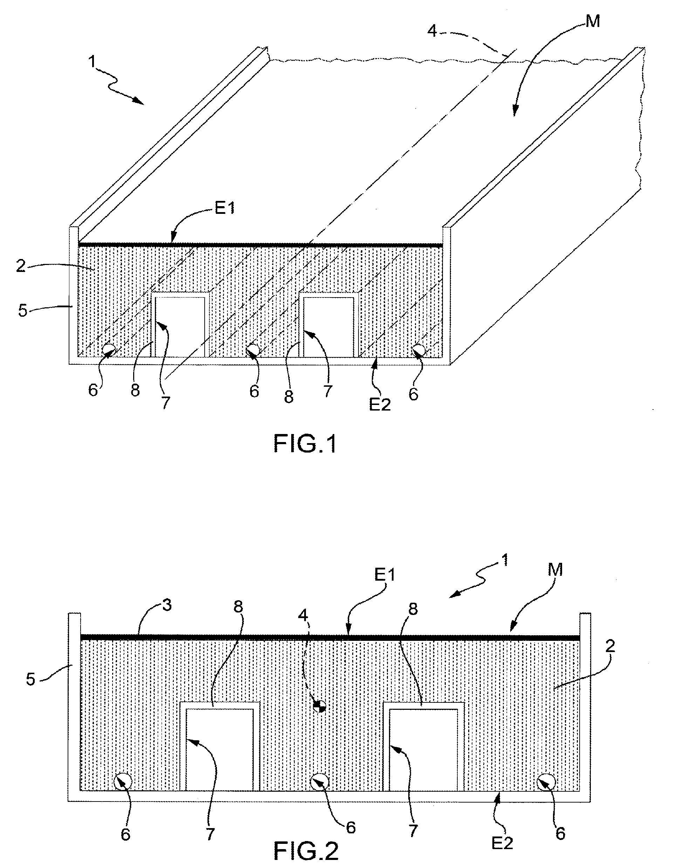

Figure 1, with the number 1, indicates as a whole, an energy converter that includes an air conditioning module M which comprises, in turn, a base body 2 and an absorbing element 3 of electromagnetic thermal radiation coupled to the base body 2. In particular, the absorbing element 3 is able to absorb light radiation and, in particular, radiation from the sun. As shown in Figure 1, the base body 2 has a substantially parallelepiped shape with a longitudinal axis 4. According to a variant not shown, the base body 2 may have a different form, such as a cylinder or prism.

As illustrated in Figures 1 to 4, the converter 1 includes a coating applied to a side wall 5; in particular, the coating 5 has a U-shaped cross-section axis 4 and covers three sides of the base body 2. The coating 5 is capable of waterproofing at least in part the converter 1.

The base body 2 is made of a material with a porosity greater than 40%. Preferably, the base body 2 is made of a material with porosity between 40% and 70%.

The base body 2 is made also of a material with permeability less than 10-6 [m/sec]. Preferably, the base body 2 is made of a material with permeability is between 10-7 and 10-8 [m/sec].

The base body 2 is made also of a material with index of capillary ascension greater than 0.5 [cm/min]. Preferably, the base body 2 is made of a material with an index of capillary ascension between 0.5 and 3 [cm/min] (in particular, during an initial phase of operation).

In other words, the base body 2 can be easily soaked by a fluid and thus help the expansion and evaporation of the liquid inside it.

The base body 2 is made of materials with high affinity for water, with a porosity and capillary ascension as specified above; for example, a ceramic material of a clay type including montmorillonite, illite, bentonite, kaolinite as well as silica, iron and calcium carbonate. As shown in Figure 1, the absorbing element 3 is integrated in the base 2 without interruption at one end E1 so as to face a light radiation. In other words, the absorbing element 3 is defined by an upper portion of the base body 2 which has a different colour from the rest of the base body 2 itself. According to a variant, an absorbing element 3 is separate and different from the base body 2, is placed in direct contact with the base body 2, and is made of a material with a porosity different to the porosity of the base body 2. Preferably, the absorbing element 3 is made of a black body or, in other words, of a body presenting a dark colour able to absorb the light radiation striking the top of the base body 2 without significantly altering the properties of the material such as its porosity and capillarity. In other words, the absorbing element 3 does not worsen the parameters of the speed of capillary rise of the base body 2.

As illustrated, the converter 1 includes a supply system 6 which feeds an evaporative liquid to the air conditioning module M at one end E2 opposite the end E1, so that evaporative liquid penetrates and spreads by capillarity inside the air conditioning module itself. The converter 1 also includes a circulation system 7 for a heat exchange fluid in contact with the air conditioning module M at the end E2.

With reference to figures 1 and 2, the base body 2 of the air conditioning module M comprises one or more channels 6 of supply allowing an evaporative liquid to pass through; in other words, the channels 6 of the air conditioning module M act as a supply system of the evaporative liquid for each converter 1. According to variants not shown, the supply system 6 is capable of feeding the fluid to the air conditioning module M in an areal manner, linear or pointlike.

Also accordingly with reference to Figure 1 and 2, the base body 2 of the air conditioning module M comprises one or more exchange ducts 7 through which flows the heat exchange fluid; in other words, the ducts 7 act as a circulation system for each converter 1. Preferably, the ducts 7 are internally lined with a material impermeable to the liquid. In addition, the base body 2 includes a number of metal elements 8, each of which passes internally through a respective duct 7 and allows an increase in the thermal conductivity of the converter between the base body 2 and a heat exchange fluid flowing through the exchange ducts 7.

As illustrated in Figures 1 and 2, the supply channels 6 and the exchange ducts 7 are parallel to the axis 4 and are spaced between each other; in other words, exchange between the two exchange ducts 7 adjacent to them is interposed a supply channel 6. The supply channels 6 have a circular cross section, whilst the exchange ducts 7 have a rectangular section. The cross section of each supply channel 6 is considerably smaller than the cross section of the exchange ducts 7. The cross sections of the channels 6 and the ducts 7 are intended to allow (for example in a facility of 100 square metres) the passage of 1 cubic meter of water/day and, respectively, 400 litres per second.

The coating 5 and the conduits 6 and 7 may be made of any material.

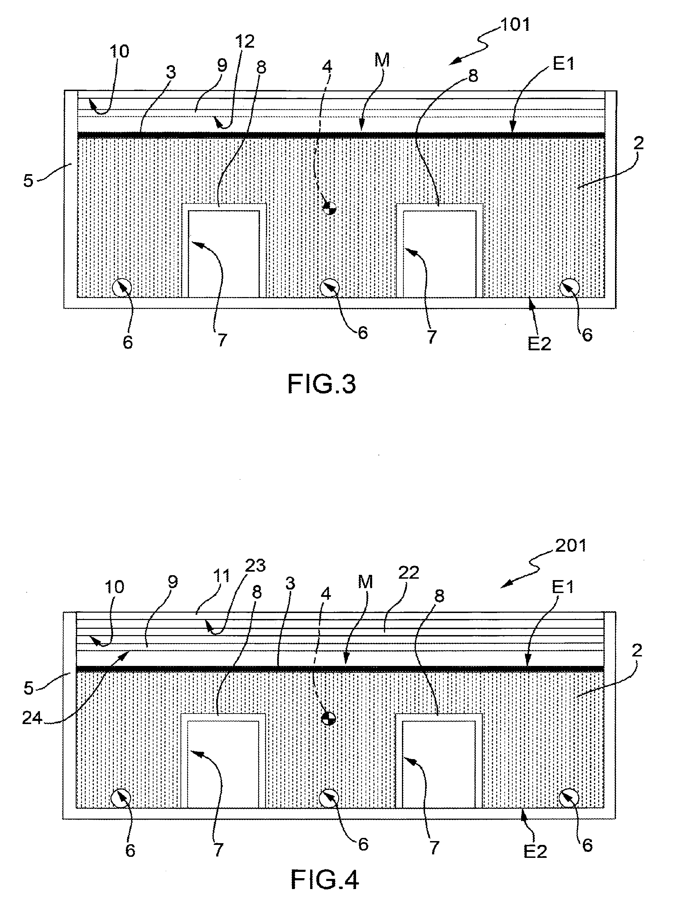

According to the variant shown in Figure 3, the energy converter 101 includes a pane of glass 9 which is integral with the body base 2 or 5, next to the absorption element 3, but separated from the absorption element 3. The converter 101 also includes an additional glass pane 11 applied to the base body 2 and next to the glass pane 9. In particular, the glass pane 9 is interposed between the absorbing element 3 and the glass pane 11 so as to define laterally a circulation chamber 12 with base body 2. In addition, the glass pane 9 defines laterally a chamber 10 with the glass pane 11. As shown in figure 3, the circulation chamber 12 has a rectangular section and is enclosed above by a glass pane 9, below the absorption element 3 and, laterally, by the coating 5. The circulation chamber 12 is capable of being traversed by a flow.

The chamber 10 is sealed and filled with a gas selected from a group of gases including: NH3, C2H4, CH4 or Ar. In other words, the chamber 10 is filled with a gas opaque to infrared. The glass pane 9 is lead glass or, alternatively, is covered with a film of lead glass. The glass pane 11 is capable of supporting body weight and delimits the chamber 10. According to the variant illustrated in figure 4, the converter 201 includes an additional glass pane 22 which is interposed between the glass pane 9 and the glass pane 11. The glass pane 22 delimits laterally together with the glass pane 9 and the coating 5, the chamber 10 sealed and filled with a gas opaque to infrared. In addition, the glass pane 22 delimits laterally with the glass pane 11 and the coating 5 a chamber 23. The chamber 23 is sealed and held under a small vacuum. Alternatively, the chamber 23 contains an insulating gas. As shown in figure 4, the glass pane 9 is spaced from the base body 2 so as to define laterally with the base body 2 itself a circulation chamber 24, which is designed to be traversed by a flow of air, as will be better explained later.

According to a variant, not shown, the system of glass panes previously described and illustrated in figures 3 and 4 can be placed on other supports or external structures.

Preferably, each type of converter 1, 101 or 201 of the type described above can be produced in a modular format and can be coupled both longitudinally and laterally with one or more similar converters 1, 101 or 201, so as to form a large energy exchange platform.

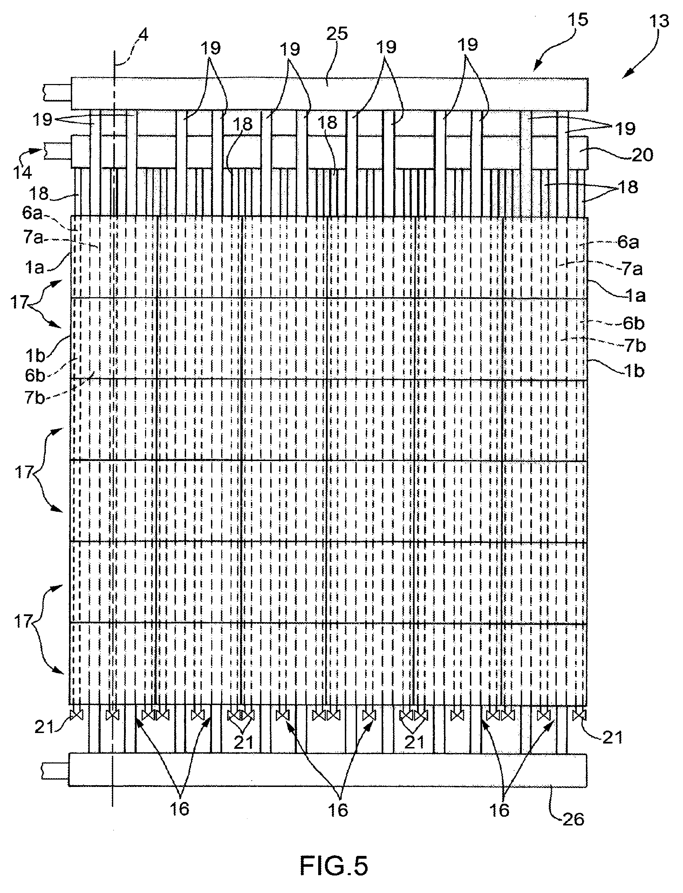

Figure 5 under number 13 illustrates an air conditioning system 13 covering a plurality of converters 1, a hydraulic supply circuit 14 of an evaporative liquid as well as the supply systems, which are defined by channels 6 and a pneumatic circulatory circuit 15 of an exchange fluid through the circulatory systems, which are defined by the exchange ducts 7. Preferably, the hydraulic circuit 14 feeds demineralised water to the supply system 6 and the pneumatic circuit 15 feeds the air circulation system 7.

As shown in Figure 5, the system 13 includes a plurality of converters 1 lined up with each other along the axis 4 so as to form a column of converters 16; likewise, the system 13 includes a plurality of converters 1 aligned sideways, i.e. transversely to the axis 4, so as to form rows 17. In other words, the converters 1 of the system 13 essentially form a matrix. In particular, with a pair of converters 1a and 1b adjacent to a column 16, i.e. two converters 1a and 1b in alignment along the axis 4, the supply channels 6a of the converter are hydraulically connected with respective supply channels 6b of the converter 1b; similarly, the exchange ducts 7a of the converter 1a are connected pneumatically to respective exchange ducts 7b of the converter 1b.

In this way, the union of the supply channels 6 of the converters 1 of a column 16 forms a tube 18 for the flow of water. Similarly, the union of the exchange ducts 7 of the converters 1 of a column 16 forms a tube 19 for the passage of air.

As shown in figure 5, the hydraulic circuit 14 includes a collector 20, from which branches off the tubes 18 and a discharge system comprising a plurality of vent valves 21 for the water arranged as an exit out of each tube 18.

As shown in Figure 5, the pneumatic circuit 15 includes a collector 25 and a collector 26 disposed as input and, respectively, output with respect to the columns 16.

During a warm period (spring or summer), an installation 13 comprising a plurality of converters 1, 101 or 201 can be used for cooling an airflow. In this case, the hydraulic circuit 14 starts to feed the demineralised water to the supply systems 6. The water flowing through the supply systems 6 is absorbed by the porous material of the base body 2 and by way of capillary action expands within the base body 2 itself.

At the same time, the base body 2 of the air conditioning module M is heated by the external environment and, in particular, by the luminous radiation absorbed by the absorbing element 3. In addition, the absorbing element 3 is able to absorb heat radiation from the environment. For example, the absorbing element 3 is able to absorb thermal radiation from hot environments such as server farms.

The heat absorbed by the upper portion of the base body 2 in correspondence with the absorbing element 3 causes the evaporation of water absorbed by the base body 2 itself and then determines a cooling of the extremity E2 of the base body 2 at which point tare to be found exchange ducts 7. In other words, the water soaks by way of capillary action the base body 2, evaporates by way of the heat that is absorbed by the upper portion of the base body 2 through the absorbing element 3 and then determines a cooling of the lower portion, extremity E2, of the base body 2 in correspondence with the exchange ducts 7.

At the same time a flow of air is moved through the exchange ducts 7, in order to exchange the heat with the base body 2 (or rather with the lower portion of the base body 2). Basically, the air passing through the base body 2 is cooled. The metallic elements 8 included in the exchange ducts 7 encourage the exchange of heat between the base body 2 and the air which passes through the exchange ducts 7.

During a cold period a system 13 comprising a plurality of converters 1, 101 or 201 can be used to heat a flow of air. In particular, to ensure this type of operation, the hydraulic system 14 of the system 13 is emptied so as to drain water from the base body 2. The radiation impacting through the lead glass 9 on the absorbing element 3 heats the base body 2. The gas in the chamber 10 and the lead glass prevent any heat loss from the base body 2 to the outside. The flow of air that is passed through the tubes 19 is heated during passage through the system 13, in particular the converters 1 and, therefore, through circulation systems 7.

It is noted that during operation in the warm period, the air through the tubes 19 acts in part as a heat carrier and in part with the function of evaporation and replacement of the humidified air from the evaporative process. Whilst during the cold period the air acts only as a heat carrier.

Where the system 13 includes a plurality of converters of the type 101 or 201, it is noted that the circulatory chambers 12 or 24 of the two converters 101 or 201 are pneumatically interconnected in succession following the forward direction of the air flow. During the summer, the air which flows through the circulatory chambers 12 or 24 is used to enhance the evaporation and replacement of humidified air from the evaporative process. During the winter, the air which flows through the circulatory chambers 12 or 24 is used as heat carrier. From what has been set out above it is noted that a converter 1, 101 or 201 of the type described above installed outdoors (i.e. the absorbing element 3 exposed to the sun) permits during a warm period (spring or summer) the cooling of a flow of air through the circulatory systems 7, due to cooling of the base body 2 itself due to the expansion of the evaporative liquid which fills in a capillary manner the porous body 2 and the subsequent evaporation due to the heating of the porous body 2 resulting from solar thermal effect. In this way, the energy from solar radiation is converted directly into negative thermal energy for cooling a flow of air passing through the circulatory systems 7.

If installed in a closed environment where there is a heat source (i.e. not exposed to sunlight), a converter 1, 101 or 201 of the type described above allows a flow of cooling air through the circulatory systems 7 thanks to the cooling of the base body 2 itself due to the expansion of the evaporative liquid which fills in a capillary manner the porous body 2 and the subsequent evaporation due to the heating of the porous body 2 connected to the absorption of heat present within a closed environment. In this way, a converter 1, 101 or 201 of the type described above turns the heat absorbed within the environment into negative thermal energy for cooling a flow of air passing through the circulatory systems 7.

With reference to the above, a system 13 in addition to being used outdoors (mainly for the conversion of solar energy) can also be used for the air conditioning of closed areas (in which can be found predominantly thermal radiation) and extensive areas such as industrial plants, photovoltaic plants, server farms or warehouses. For example, a server farm is a closed environment in which is found at least one heat source; in such a case, the system 13 is able to absorb at least part of the thermal radiation in the environment so as to heat each porous body 2.

In addition, the converter 1, 101 or 201 of the type described above and installed outdoors allows during a cold period (autumn or winter) the exploitation of the heat generated by light radiation to heat a flow of air.

A converter 1, 101 or 201 of the type described above is a simple, fast and cheap implementation. In addition, the modular design of each converter 1, 101 or 201 allows a simple and quick assembly. Finally, the structure of the system is relatively lightweight and can be installed on top of buildings.

## Claims

1. Method for the conversion of energy, in particular solar energy; the method comprising the steps of:
heating a first end (E1) of a base body (2) made of a porous material by way of electromagnetic radiation, in particular by sunlight, that impacts an absorbing element (3) ;
feeding an evaporative liquid to the base body (2) at a second end (E2) of the base body (2) opposite the first end (E1) of the base body (2) so that the evaporative liquid penetrates inside the base body (2) and spreads inside the body base (2) by capillary action, and
circulating a heat exchange fluid;
the method is **characterized in that**:
the absorbing element (3) is thermally coupled to the base body (2) at said first end (E1); and
the heat exchange fluid is circulated in contact with the base body (2) at said second end (E2).

2. Method according to claim 1, wherein:
the evaporative liquid is fed into the base body (2) through at least one flow channel (6), which passes through the base body (2) and presents a series of openings passing through to the base body (2); and
the heat exchange fluid is circulated through at least one exchange duct (7) which passes through the base body (2) and is sealed with regard to fluids with respect to the body base (2).

3. Energy converter, in particular for solar energy, comprising:
an air conditioning module (M) comprising at least a base body (2) made of porous material and an absorbing element (3) able to absorb electromagnetic radiation, in particular sunlight, at a first end (E1) of the base body (2) ;
a supply system (6) supplying an evaporative liquid to the air conditioning module (M) at a second end (E2) of the base body (2) so that the evaporative liquid at least partially penetrates and spreads by capillary action within the air conditioning module (M); and
a circulatory system (7) for a heat exchange fluid in contact with the air conditioning module (M) at the second end (E2) of the base body (2);
the energy converter (1, 101, 201) is **characterised in that** the absorbing element (3) of electromagnetic radiation, in particular sunlight, is thermally coupled to a first end (E1) of the base body (2).

4. Energy converter according to claim 3 and comprising a glass pane (9) which faces the absorbing element (3) of the base body (2) and defines together with said absorbing element (3) a chamber (10) filled with a gas chosen from within a group of gases comprising NH3, C2H4, CH4 or Ar.

5. Energy converter according to claim 3 or 4, wherein the base body (2) is made of a material presenting a porosity greater than 40%; in particular, the base body (2) is made of ceramic material.

6. Energy converter according to claim 5, wherein the base body (2) is made of a material presenting a porosity between 40% and 70%.

7. Energy converter according to one of claims 3 to 6, wherein:
the base body (2) comprises at least one supply channel (6) which passes through the base body (2) at a second end (E2) of the base body (2) opposite to the first end (E1) of the base body (2), and presents a series of openings through the base body (2); and
the channel (6) acts as a supply system for the energy converter (1, 101, 201).

8. Energy converter according to one of claims 3 to 7, wherein:
the base body (2) comprises at least an exchange duct (7) which passes through the base body (2) at the second end (E2) of the base body (2) and is sealed with regard to fluids with respect to the base body (2); and
said duct (7) acts as a circulatory system (7) for the energy converter (1, 101, 201).

9. Air conditioning system (13) comprising a pair of adjoining energy converters (1a, 1b), each of which is realized according to one of claims 3 to 8;
wherein the supply system (6a) and the circulatory system (7a) of the first energy converter (1a) are in fluidic communication with the supply system (6b) and circulatory system (7b) of the second energy converter (1b); and
wherein the air conditioning system (13) comprises a hydraulic circuit (14) for the supply of the evaporative liquid to the supply systems (6) and a pneumatic circuit (15) for supplying the flow of heat exchange to the circulatory systems (7).

10. Use of an air conditioning system according to claim 9 for the cooling of an environment in which is found at least one heat source, especially for cooling a server farm, the air conditioning system being able to absorb at least part of the thermal radiation generated by that heat source.

## Patentansprüche

1. Verfahren zum Umwandeln von Energie, insbesondere Solarenergie, wobei das Verfahren folgende Schritte umfasst:
Aufheizen eines ersten Endes (E1) eines Basiskörpers (2) mittels elektromagnetischer Strahlung, insbesondere Sonnenlicht, das auf ein Absorptionselement (3) auftrifft, wobei der Basiskörper (2) aus einem porösen Material hergestellt ist;
Zuführen einer Verdampfungsflüssigkeit in den Basiskörper (2) an einem zweiten Ende (E2) des Basiskörpers (2), das gegenüber dem ersten Ende (E1) des Basiskörpers (2) angeordnet ist, sodass die Verdampfungsflüssigkeit in den Basiskörper (2) eindringt und sich im Basiskörper (2) durch Kapillarwirkung ausbreitet, und
Zirkulieren lassen einer Wärmeaustauschflüssigkeit;
**dadurch gekennzeichnet, dass**
das Absorptionselement (3) thermisch mit dem Basiskörper (2) am ersten Ende (E1) gekoppelt ist; und
die Wärmeaustauschflüssigkeit in Kontakt mit dem Basiskörper (2) am zweiten Ende (E2) zirkuliert wird.

2. Verfahren nach Anspruch 1, wobei:
die Verdampfungsflüssigkeit in den Basiskörper (2) durch mindestens einen Fließkanal (6) eingespeist wird, wobei der Fließkanal (6) durch den Basiskörper (2) verläuft und eine Reihe von Öffnungen darstellt, die durch den Basiskörper (2) verlaufen; und
die Wärmeaustauschflüssigkeit durch mindestens eine Austauschdurchführung (7) zirkuliert wird, wobei die Austauschdurchführung (7) durch den Basiskörper verläuft und im Bezug auf Flüssigkeiten gegenüber dem Basiskörper (2) abgedichtet ist.

3. Energiewandler, insbesondere für Solarenergie, umfassend:
ein Luftkühlungsmodul (M) umfassend mindestens einen Basiskörper (2), der aus einem porösen Material hergestellt ist, und ein Absorptionselement (3), das eingerichtet ist, elektromagnetische Strahlung, insbesondere Sonnenlicht, an einem ersten Ende (E1) des Basiskörpers (2) zu absorbieren;
ein Versorgungssystem (6) zum Zuführen einer Verdampfungsflüssigkeit zum Luftkühlungsmodul (M) an einem zweiten Ende (E2) des Basiskörpers (2), sodass die Verdampfungsflüssigkeit zumindest teilweise in das Luftkühlungsmodul (M) eindringt und sich durch die Kapillarwirkung im Luftkühlungsmodul (M) ausbreitet; und
ein Zirkulationssystem (7) für eine Wärmeaustauschflüssigkeit, das in Kontakt mit dem Luftkühlungsmodul (M) am zweiten Ende (E2) des Basiskörpers (2) ist;
wobei der Energiewandler (1, 101, 2011) **dadurch gekennzeichnet ist, dass** das Absorptionselement (3) für elektromagnetische Strahlung, insbesondere Sonnenlicht, thermisch mit dem ersten Ende (E1) des Basiskörpers (2) gekoppelt ist.

4. Energiewandler nach Anspruch 3, wobei der Energiewandler ferner eine Glasscheibe (9) umfasst, die gegenüberliegend dem Absorptionselement (3) des Basiskörpers (2) angeordnet ist und zusammen mit dem Absorptionselement (3) eine Kammer (10) bildet, wobei die Kammer mit einem Gas gefüllt ist, wobei das Gas aus einer Gruppe von Gasen umfassend NH3, C2H4, CH4 oder Ar gewählt ist.

5. Energiewandler nach einem der Ansprüche 3 oder 4, wobei der Basiskörper (2) aus einem Material hergestellt ist, das eine Porosität größer als 40 % aufweist, wobei der Basiskörper (2) insbesondere aus einem keramischen Material hergestellt ist.

6. Energiewandler nach Anspruch 5, wobei der Basiskörper (2) aus einem Material hergestellt ist, das eine Porosität zwischen 40 % und 70 % aufweist.

7. Energiewandler nach einem der Ansprüche 3 bis 6, wobei
der Basiskörper (2) mindestens einen Versorgungskanal (6) umfasst, der durch den Basiskörper (2) an einem zweiten Ende (E2) des Basiskörpers (2) gegenüber des ersten Endes (E1) des Basiskörpers (2) verläuft, wobei der Versorgungskanal (6) eine Reihe von Öffnungen durch den Basiskörper (2) darstellt; und
der Kanal (6) als Versorgungssystem für den Energiewandler (1, 101, 201) wirkt.

8. Energiewandler nach einem der Ansprüche 3 bis 7, wobei
der Basiskörper (2) mindestens eine Austauschdurchführung (7) umfasst, die durch den Basiskörper (2) am zweiten Ende (E2) des Basiskörpers (2) verläuft, wobei die Austauschdurchführung (7) im Bezug auf Flüssigkeiten gegenüber dem Basiskörper (2) abgedichtet ist; und
die Austauschdurchführung (7) als Zirkulationssystem (7) für den Energiewandler (1, 101,201)dient.

9. Luftkühlungssystem (13) umfassend ein Paar aneinander grenzende Energiewandler (1a, 1 b), wobei jeder Energiewandler (1a, 1 b) jeweils nach einem der Ansprüche 3 bis 8 realisiert ist;
wobei das Versorgungssystem (6a) und das Zirkulationssystem (7a) des ersten Energiewandlers (1a) in fluidischer Austauschverbindung mit dem Versorgungssystem (6b) und dem Zirkulationssystem (7b) des zweiten Energiewandlers (1b) stehen; und
wobei das Luftkühlungssystem (13) einen hydraulischen Kreislauf (14) zur Zuführung der Verdampfungsflüssigkeit zum Versorgungssystem (6) und einen pneumatischen Kreislauf (15) zur Zuführung des Stroms eines Wärmeaustauschs zum Zirkulationssystem (7) umfasst.

10. Verwendung eines Luftkühlungssystems nach Anspruch 9 zum Kühlen einer Umgebung in der eine Wärmequelle angeordnet ist, insbesondere zum Kühlen einer Serverfarm, wobei das Luftkühlungssystems eingerichtet ist, zumindest einen Teil der thermischen Strahlung von der Wärmequelle zu absorbieren.

## Revendications

1. Procédé de conversion d'énergie, en particulier d'énergie solaire, le procédé comprenant les étapes consistant de :
chauffer une première extrémité (E1) d'un corps de base (2) constitué d'un matériau poreux au moyen d'un rayonnement électromagnétique, en particulier par la lumière du soleil, qui est incident à un élément absorbant (3} ;
alimenter en liquide évaporable le corps de base (2) à une seconde extrémité (E2) du corps de base (2) opposée à la première extrémité (E1) du corps de base (2) de manière que le liquide évaporable pénètre à l'intérieur du corps de base (2) et se propage à l'intérieur du corps de base (2) par capillarité, et
faire circuler un fluide d'échange de chaleur ;
le procédé étant **caractérisé en ce que** :
l'élément absorbant (3) est couplé thermiquement au corps de base (2) au niveau de ladite première extrémité (E1) ; et
le fluide d'échange de chaleur est mis en circulation en contact avec le corps de base (2) au niveau de ladite seconde extrémité (E2).

2. Procédé selon la revendication 1, dans lequel :
le liquide évaporable est alimenté dans le corps de base (2) à travers au moins un conduit d'écoulement (6) qui traverse le corps de base (2) et qui présente une série d'orifices ménagés à travers le corps de base (2) ; et
le fluide d'échange de chaleur est mis en circulation à travers au moins un conduit d'échange (7) qui traverse le corps de base (2) et qui est rendu étanche vis-à-vis de fluides par rapport au corps de base (2).

3. Convertisseur d'énergie, en particulier d'énergie solaire, comprenant :
un module de conditionnement d'air (M) comprenant au moins un corps de base (2) réalisé en matériau poreux et un élément absorbant (3) apte à absorber un rayonnement électromagnétique, en particulier la lumière du soleil, à une première extrémité (E1) du corps de base (2) ;
un système d'alimentation (6) fournissant un liquide évaporable au module de conditionnement d'air (M) à une seconde extrémité (E2) du corps de base (2) de manière que le liquide évaporable pénètre et se propage au moins partiellement par capillarité à l'intérieur du module de conditionnement d'air (M) ; et
un système de circulation (7) destiné à un fluide d'échange de chaleur en contact avec le module de conditionnement d'air (M) à la seconde extrémité (E2) du corps de base (2) ;
le convertisseur d'énergie (1, 101, 201) étant **caractérisé en ce que** l'élément absorbant (3) de rayonnement électromagnétique, en particulier de lumière solaire, est couplé thermiquement à une première extrémité (E1) du corps de base (2).

4. Convertisseur d'énergie selon la revendication 3 et comprenant un panneau de verre (9) qui fait face à l'élément absorbant (3) du corps de base (2) et qui définit conjointement avec ledit absorbant élément (3) une chambre (10) remplie d'un gaz choisi dans un groupe de gaz comprenant NH3, C2H4, CH4 ou Ar.

5. Convertisseur d'énergie selon la revendication 3 ou 4, dans lequel le corps de base (2) est réalisé en un matériau présentant une porosité supérieure à 40% ; en particulier, le corps de base (2) est réalisé en matériau céramique.

6. Convertisseur d'énergie selon la revendication 5, dans lequel le corps de base (2) est réalisé en un matériau présentant une porosité comprise entre 40% et 70%.

7. Convertisseur d'énergie selon l'une des revendications 3 à 6, dans lequel:
le corps de base (2) comprend au moins un conduit d'alimentation (6) qui traverse le corps de base (2) à une seconde extrémité (E2) du corps de base (2) opposée à la première extrémité (E1) du corps de base (2) et qui présente une série d'orifices ménagés à travers le corps de base (2) ; et
le conduit (6) agit comme un système d'alimentation pour le convertisseur d'énergie (1, 101, 201).

8. Convertisseur d'énergie selon l'une des revendications 3 à 7, dans lequel :
le corps de base (2) comprend au moins un conduit d'échange (7) qui traverse le corps de base (2) à la seconde extrémité (E2) du corps de base (2) et qui est rendu étanche vis-à-vis de fluides par rapport au corps de base (2) ; et
ledit conduit (7) agit comme un système de circulation (7) pour le convertisseur d'énergie (1, 101, 201).

9. Système de conditionnement d'air (13) comprenant une paire de convertisseurs d'énergie adjacents (1a, 1b), qui sont chacun réalisés selon l'une des revendications 3 à 8 ;
dans lequel le système d'alimentation (6a) et le système de circulation (7a) du premier convertisseur d'énergie (1a) sont en communication fluidique avec le système d'alimentation (6b) et le système de circulation (7b) du second convertisseur d'énergie (1b) ; et
dans lequel le système de conditionnement d'air (13) comprenant un circuit hydraulique (14) servant à alimenter en liquide évaporable les systèmes d'alimentation (6) et un circuit pneumatique (15) destiné à alimenter en flux d'échange de chaleur les systèmes de circulation (7).

10. Utilisation d'un système de conditionnement d'air selon la revendication 9 destiné à refroidir un environnement dans lequel se trouve au moins une source de chaleur, en particulier pour refroidir une batterie de serveurs, le système de conditionnement d'air étant capable d'absorber au moins une partie du rayonnement thermique générée par cette source de chaleur.
